**Europäisches Patentamt**

**European Patent Office**

**Office européen des brevets**

(19)

(11) Veröffentlichungsnummer: **0 413 954 A2**

# EUROPÄISCHE PATENTANMELDUNG

(12)

(21) Anmeldenummer: 90113579.8

(22) Anmeldetag: 16.07.90

(51) Int. Cl.5: **B23Q 11/08**, B23B 25/04, B24B 55/04

(30) Priorität: 22.08.89 DE 3927712

(43) Veröffentlichungstag der Anmeldung:
**27.02.91 Patentblatt 91/09**

(84) Benannte Vertragsstaaten:
**CH DE FR GB LI SE**

(71) Anmelder: **Boehringer Werkzeugmaschinen GmbH**
**Stuttgarter Strasse 50 Postfach 220**
**D-7320 Göppingen(DE)**

(72) Erfinder: **Gloser, Wolfgang**
**Blumenstrasse 22**
**D-7321 Börtlingen(DE)**
Erfinder: **Kuhn, Siegfried**
**Gammelshauserstrasse 8**
**D-7321 Dürnau(DE)**

(74) Vertreter: **Vogeser, Werner, Dipl.-Ing. et al**
**Patentanwälte + Rechtsanwälte Hansmann,**
**Vogeser, Boecker & Alber**
**Albert-Rosshaupter-Strasse 65**
**D-8000 München 70(DE)**

(54) **Schutzabdeckung.**

(57) Werkzeugmaschinen arbeiten mit immer höheren Drehzahlen zum Antrieb der Werkstücke oder Werkzeuge. Wenn ein solches Teil mangels ausreichender Halterung davongeschleudert wird, so besitzt es eine sehr hohe kinetische Energie. Zum Schutz des Bedienungspersonals sind Schutzabdeckungen notwendig, die im Bereich des Werkstückes und der Werkzeuge beweglich ausgebildet sein müssen und auch durchsichtig, um den Arbeitsfortschritt beobachten zu können. Stahlabdeckungen erreichen - wenn die heute möglichen Drehzahlen in Verbindung mit den möglichen Werkstück- oder Werkzeug-Gewichten abgesichert sein sollen-hier inzwischen eine Dicke, deren Eigengewicht problematisch wird.

Es wird daher vorgeschlagen, die bisher nur als kleines Sichtfenster in einer Stahlabdeckung verwendeten Polycarbonatscheiben auf die gesamte Abdeckung auszudehnen. Aufgrund der starken Elastizität derartiger Kunststoffe sind derartige Polycarbonatabdeckungen nicht nur dünn, sondern vor allem auch leicht, so daß außer einer die entsprechende Verformung bei einem Beschuß berücksichtigenden Gegenhalterung keine konstruktiven Probleme,bedingt durch ein hohes Eigengewicht, auftreten.

Die Erfindung betrifft Schutzabdeckungen an Werkzeugmaschinen, die den Arbeitsraum der Werkzeugmaschinen begrenzen. Dadurch soll die Umgebung, besonders der Bediener der jeweiligen Maschine, vor u.U. mit hoher Geschwindigkeit und Durchschlagskraft davonfliegenden Maschinen- oder Werkzeugteilen geschützt werden. Dies ist besonders bei Drehmaschinen, die teilweise mit sehr hohen Drehzahlen arbeiten, notwendig, da aufgrund der Fliehkräfte bei der Einspannung des Werkstückes Spannbacken oder gebrochene Werkstücke eine sehr hohe kinetische Energie besitzen. Im folgenden sind die Ausführungen deshalb speziell im Hinblick auf Drehmaschinen konzipiert, jedoch ist eine derartige Abdeckung für alle Arten von Werkzeugmaschinen und auch anderen Arbeitsmaschinen, bei denen ein derartiges Problem vorliegt, anwendbar.

Bei Drehmaschinne steht der Bediener in aller Regel an der Vorderseite der Maschine, um in den Arbeitsraum blicken und den Fertigungsvorgang beobachten zu können. Je nach Automatisierungsgrad ist ein mehr oder weniger häufiges manuelles Eingreifen des Bedieners notwendig. Deshalb muß die Abdeckung zum Bediener hin leicht zu öffnen sein. Sie darf deshalb nicht allzu schwer sein.

Dagegen kann an den Rückseiten und teilweise auch an der Oberseite des Arbeitsraumes eine sehr massive, wenigstens teilweise feststehende, hintere und obere sowie vordere seitliche Abdeckung etwa aus Stahlblech angeordnet werden, da die Maschine von dieser Seite her nicht ständig zugänglich sein muß. Ggf. sind derartige Abdeckungen teleskopartig in Z-Richtung, also der Längsachse der Werkzeugmaschine verlängerbar, was parallel zur Bewegung von Reitstock oder Supporten geschieht, oder diese Abdeckungen sind über die volle maximale Länge des Arbeitsraumes fest montiert.

Die Vorderseite und teilweise auch die Oberseite des Arbeitsraumes müssen dagehen leicht zugänglich sein, um eine einfache Beschickung des Arbeitsraumes und auch ein manuelles Eingreifen durch den Bediener jederzeit zu ermöglichen. Gleichzeitig muß die Abdeckung der Vorderseite Sichtkontakt des außenstehenden Bedieners zum Inneren des Arbeitsraumes gewährleisten.

Zu diesem Zweck sind bisher an Drehmaschinen beispielsweise Schiebetüren aus Stahlblech verwendet worden, die mit der Unterkante an einer entsprechenden Fläche der oberen Abdeckung der Drehmaschine geführt waren. Diese Schiebetüren aus Stahlblech wiesen ein Sichtfenster auf, welches aus einer Scheibe aus durchsichtigem Polykarbonat bestand und mittels eines Abdeckrahmens in einem entsprechenden offenen Falz der Schiebetür aus Stahlblech befestigt war.

Dieser meist ebenfalls umlaufende Abdeckrahmen mußte eine ausreichend große Überlappung mit der Polykarbonatscheibe aufweisen, um bei Beschluß dieser Polykarbonatscheibe vom Arbeitsraum her durch ein davonfliegendes Teil diese sicher in der Stahlblechtüre zu halten. Da Polykarbonat ein sehr elastischer Werkstoff ist, biegt sich die Scheibe des Sichtfensters aus Polykarbonat bei Beschluß von innen relativ stark nach außen durch, so daß die Ränder der Scheibe wenigstens teilweise aus der durch Falz unD Abdeckrahmen gebildeten Nut der stählernen Schiebetür gezogen wird. Abhängig von der maximal möglichen Durchbiegung der Scheibe ist daher eine ausreichende Überlappung des Abdeckrahmens mit der Scheibe notwendig gewesen.

Es ist zu bedenken, daß bei normalen Drehmaschinendrehzahlen eine davonfliegende Spannbacke soviel kinetische Energie hat, daß eine vier Millimeter dicke Stahlwand noch durchschlagen wird, Wird dagegen speziell im Hochgeschwindigkeitsbereich gearbeitet, so werden die notwendigen Stahlwände so dick, daß sie nicht mehr beweglich, sondern nur noch fest angeordnet werden können.

Polykarbonat ist dagegen so elastisch, daß eine nur 6 mm dicke Polykarbonatscheibe bereits nicht mehr von einer Gewehrkugel durchschossen werden kann. Die kinetische Energie der auftreffenden Teile wird dabei durch Verformung der Scheibe vernichtet, wobei die Befestigung oder Aufnahme der Scheibe eine solche Verformung natürlich zulassen muß.

Die als Sichtfenster in stählernen Schiebetüren verwendeten Polykarbonatscheiben haben üblicherweise eine Dicke von 8 bis 12 mm Polykarbonat.

Die Nachteile der bisher verwendeten Schiebetüren bestehen darin, daß aufgrund der Herstellung aus Stahlblech diese Schiebetüren ein erhebliches Gewicht aufweisen und dennoch beim Drehen im Hochgeschwindigkeitsbereich z.B. bei 5 mm Blechstärke noch keine absolute Sicherheit gegeben ist. Hierzu müßte die Materialstärke weiter erhöht werden, was jedoch einen immer weniger vertretbaren Aufwand für die Herstellung und insbesondere die Führung einer so schweren Stahltüre erfordert.

Es ist daher die Aufgabe der Erfindung, eine Abdeckung für den Arbeitsraum von Werkzeugmaschinen zu schaffen, die unter Gewährleistung der Durchschlagsicherheit auch bei hohen Drehzahlen ein geringeres Gewicht und damit einfachere Bewegungs- und Führungsmöglichkeiten bietet als die bisher verwendeten Abdeckungen, die größtenteils aus Stahlblech oder anderen Materialien von hohem spezifischen Gewicht bestanden.

Diese Aufgabe ist im kennzeichnenden Teil des Anspruchs 1 gelöst. Um vorzuschlagen, die gesamte bewegliche Abdeckung aus einer entsprechend geformten Polykarbonatscheibe herzustellen, ist natürlich das bisher existierende Vorurteil besonders der Maschinenbauingenieure zu überwinden, daß für derartige Schutzvorrichtungen besonders gute Stahlwerkstoffe aufgrund ihres hohen spezifischen Gewichts und ihrer Stabilität und Elastizität infrage kommen.

Die Herstellung der gesamten beweglichen Abdeckung aus Polykarbonat bringt eine ganze Reihe von Vorteilen mit sich: Zunächst ist das Gesamtgewicht wesentlich geringer als bei einer Abdeckung aus Metall. Zusätzlich ist die Dicke der Abdeckung geringer, so daß sich bei gleichem Arbeitsraum die Außenmaße der Maschine verringern. Wegen des geringeren Gewichts und teilweise auch der geringeren Abmessungen können die Führungen der Abdeckunng an den festen Teilen der Maschine weniger aufwendig und weniger groß dimensioniert werden, sie mussen jedoch dennoch bei einem Aufprall eines Teiles an der Abdeckung die Aufprallkraft ohne Beschädigung überstehen. Ein weiterer Vorteil besteht darin, daß mittels Polykarbonat komplizierte Formen von Abdeckungen leichter herstellbar sind als mit dicken Metallplatten. Dies gilt besonders für gerundete Konturen. Weiterhin können Größe und Lage des Sichtfensters innerhalb der gesamten Abdeckung aus Polykarbonat frei gewählt werden.

Zu diesem Zweck könnte man selbstverständlich auch die gesamte Haube aus Polykarbonat glasklar und durchsichtig belassen, wobei jedoch zu beachten ist, daß durch Späneflug und Schmiermittel bzw. Kühlmittel die Innenseite des Polykabonates sehr schnell zerkratzt bzw. beschmutzt wäre, so daß ein Durchblick schon nach kurzer Zeit nicht mehr möglich ist. Aus diesem Grund wird nur ein tatsächlich als Sichtfenster zu nutzender Teil, also beispielsweise in Augenhöhe des Bedieners, als Sichtfenster durchsichtig gehalten, Die anderen Teile der Abdeckung aus Polykarbonat werden vorzugsweise lichtdurchlässig, jedoch undurchsichtig gestaltet. Eine solche Mattierung kann beispielsweise durch Sandstrahlen erzeugt werden, und aufgrund dieser Undurchsichtigkeit wird eine Beschmutzung oder ein zusätzliches Verkratzen der Haube aus Polykarbonat nicht erkannt. Im Bereich des Sichtfensters sollte dagegen die Polykarbonatscheibe durch eine auf der Innenfläche schmutzdicht angebrachte Glasscheibe gesichert werden, die weniger leicht zerkratzt und von Verschmutzungen jederzeit gesäubert werden kann.

Bei einem Aufprall aus dem Inneren des Arbeitsraumes in diesem Bereich wird selbstverständlich diese Glasscheibe zerstört, da sie die Dehnung und Biegung der Abdeckung aus Polykarbonat nicht in diesem Maße mitmachen kann. Aus diesem Grunde sollte als Glas Sicherheitsglas verwendet werden.

Selbstervständlich muß die gesamte Abdekkung aus Polykarbonat an ihren Befestigungspunkten oder -kanten ausreichend stark befestigt werden, damit bei einem Aufprall diese Lagerpunkte die kinetische Energie des aufprallenden Gegenstandes aufnehmen können. Weiterhin ist darauf zu achten, daß diese Abdeckung, die sich ja bei einem solchen Aufprall nach außen verformt, aufgrund dieser Verformung nicht aus ihren Führungen, Aufhängepunkten etc. heraustreten kann. Evtl. Überlappungen sind also ausreichend zu dimensionieren, um bei Verformung der gesamten Abdeckung immer noch eine Zurückhaltung der gesamten Abdeckung zu gewährleisten.

Die Abdeckung kann als seitlich verschiebbare Schiebetur konzipiert sein, wie dies bei bisherigen Drehmaschinen meist der Fall ist. Derartige Schiebetüren, die im allgemeinen im Querschnitt die Form eines Trapezes ohne Basis aufweisen, sind an der unteren Kante am Bett der Werkzeugmaschine, genauer am Bettoberteil geführt, und an der Oberkante in der Nähe der Vorderkante einer meist fest angebrachten Abdeckung der Rückseite und eines Teils der Oberseite des Arbeitsraumes.

Besteht eine solche Schiebetür im wesentlichen ganz aus Polykarbonat, so ist darauf zu achten, daß beispielsweise die obere Kante der Tür die Vorderkante der festen, oberen Abdeckung hintergreift. Dies ist z.B. dann gegeben, wenn diese obere Abdeckung an der vorderen Kante eine nach oben aufragende Kröpfung aufweist, hinter der die Schiebetür sich nach unten bis in die Nähe der Oberkante der oberen Abdeckung absenkt. Vorteilhafterweise sollte das Profil der Tür zusätzlich einen Fortsatz in der waagerechte Richtung der Rückseite der Maschine aufweisen, da ein solcher Fortsatz durch eine teilweise übergreifende Sicherungsleiste, die auf der festen, oberen Abdeckung aufgeschraubt werden kann, zusätzlich gut gesichert werden kann. Selbstverständlich sind zusätzlich Führungsrollen oder andere, die Reibung vermindernde Elemente zwischen den Berührungsflächen der Schiebetür und den festliegenden Gegenflächen an der oberen Abdeckung und der Sicherungsleiste in üblicher Weise angeordnet.

Bei einer derartigen hintergreifenden und zusätzlich gesicherten oberen Kante der Schiebetür genügt es in aller Regel, wenn die untere Kante der Schiebetür, die schräg nach unten und innen in Richtung auf die Mitte des Bettes der Maschine zeigt, innerhalb des Bettoberteils endet. Dies bedeutet, daß die Schiebetür an ihrer unteren Kante mit der Außenfläche an einer entsprechenden Innenfläche des Bettoberteils entlanggleitet bzw. mittels entsprechender Gleitkörper entlanggeführt wird. Auch diese Endkante der Schiebetür kann gegen ein Abheben von den festen Teilen der Maschine, also in diesem. Fall dem Bettoberteil, durch eine die Abschlußkante übergreifende, am Maschinenbett befestigte Sicherungsleiste verhindert werden.

Wird nun eine solche Schiebetür von innen nach vorne, schräg oben oder oben durch ein davonfliegendes Teil beschossen, so wird dessen kinetische Energie dadurch vernichtet, daß sich die gesamte Schiebetür verformt in Richtung auf eine Durchbiegung gemäß der Stoßrichtung. Die parallel zur Stoßrichtung liegenden Teile der Schiebetür werden etwas gedeht und die quer zur Stoßrichtung liegenden Teile durchgebogen. Ist nun die Oberkante der Schiebetür entsprechend vorstehender Schilderung relativ spielfrei festgelegt, so geht diese Durchbieguung voll auf Kosten der unteren, im Bettunterteoil liegenden Kante der Schiebetür. Bei Durchbiegung der Schiebetür nach außen ragt auch die untere Endkante der Schiebetür weniger weit in das Bettunterteil der Maschine hinein. Wichtig ist jedoch, daß auch bei der größtmöglichen zu erwartenden Durchbiegung der gesamten Schiebetür sich die untere Endkante noch immer innerhalb des Bettoberteils befindet, also eine Überlappung von Bettoberteil und untererm Abschlußkante der Schiebetür vorhanden ist. Diese Überlappung vehindet aufgund ihrer Formschlüssigkeiteine Bewegung, vor allem des unteren Teil der Schiebtür nach außen.

Selbstverständlich könnte auch die Hintergreifung und spielfreie Festlegung statt an der oberen an der unteren Kante der Schiebetür vorgesehen sein und die einfache Überlappung und Innenlage an der anderen Kante am Oberteil der Schiebetür. Die zuerst geschilderte Anordnung ist dennoch wegen der besseren Aufnahme der Gewichtskraft besser geeignet.

Eine solche Schiebetür aus 6 bis 12 mm starkem Polykarbonat wiegt trotz der im Bereich des Sichtfensters anzubringenden zusätzlichen dünnen Glasscheibe nur etwa 1/10 soviel wie eine nach der bisherigen Methode erstellte, im wesentlichen stählerne Schiebetür.

Anstelle der Gestaltung als Schiebetür sind natürlich auch andere Gestaltungen der beweglichen Abdeckung denkbar. Beispielsweise kann bei gleicher Grundform die Abdeckung als Schwenkhaube konzipiert sein, die an der oberen Kante eine Schwenkachse aufweist, die in den festen Teilen der Maschine angeordnet ist und hochgeschwenkt wird.

In diesem Fall darf natürlich im Bereich der unteren Endkante der Schwenkhaube keine dauernde Überlappung von Schwenkhaube und Maschinenbett bei Innenlage des Maschinenbettes gegeben sein, da diese ein Aufschwenken der Schwenkhaube nach oben verhinden würde. Allerdings muß zur Energieaufnahme bei einem Beschluß der Schwenkhaube eine solche formschlüssige, ausreichend große Überlapppung vorhanden sein, Dies kann beispielsweise durch eine Überlappungsleiste gegeben werden, die ebenfalls schwenkbar am Maschinenbett gelagert ist und nach vorne unten weggeklappt werden kann, wenn die Schwenkhaube nach oben aufgeschwenkt werden soll. Beim Betrieb der Werkzeugmaschine wird dagegen zunächst die Schwenkhaube geschlossen und auch diese Überlappungsleiste gegen die untere Außenfläche der Schwenkhaube in Anlage gebracht und mit gängigen Mitteln am festen Teil de Maschine arretiert, so daß ebenso wie bei der vorher dargestellten Lösung als Schiebetür in diesem Bereich eine ausreichend große Übelappung von maschinenfesten Teilen und Abdeckung gegeben ist, die im Beschlußfall ein Ausrasten der Abdeckung verhindern.

Zusätzlich können natürlich auch die anderen Abdeckungen des Arbeitsraumes, die nicht beweglich sein müssen, statt aus Stahlblech aus einem geeigneten, wesentlich leichteren Kunststoff hergestellt werden. Insbesondere die festen Abdeckungen vorne, neben der beweglichen Abdeckung, aber ebenso auch die Abdeckungen auf der Rückseite , auf den Seiten und zur Oberseite des Arbeitsaumes hin. Diese Gewichtsersparnis vermindert das Eigengewicht der gesamten Maschine, so daß geringere Anforderungen hinsichtlich des Fundamentes zu stellen sind und es erleichtert darüberhinaus den Transport der Maschine.

Für diese Abdeckungen müssen selbstverständlich die entsprechenden Werte der Kerbschlagzähigkeit, also der Festigkeit, wie für die bewegliche Abdeckung im vorderen Bereich eingehalten werden. Zusätzlich muß der hierfür verwendete Kunststoff jedoch nicht vollständig duchsichtig sein, wie dies für den Durchblick des Bedieners bei der beweglichen Abdeckung gefordert werden muß, sondern es reicht bereits eine teilweise Lichtdurchlässigkeit aus. Hierdurch ergibt sich der Vorteil einer besseren Ausleuchtung des Arbeitsraumes, da die bisher verwendetenu unbeweglichen Abdeckungen aus Stahlblech keinerlei Licht duchließen. Somit können für diese Abdeckungen sämtliche Kunststoffe verwendet werden, die eine ausreichende Festigkeit und Kerbschlagzähigkeit besitzen und zusätzlich etwas lichtdurchlässig sind. Dadurch kommen auch faserverstärkte Kunststoffe in Betracht, während für die bewegliche Abdeckung zusätzlich die Durchsichtigkeit gegeben sein muß, was die Auswahl an Kunststoffen weiter einschrämkt. Polykarbonat ist nur ein mögliches Material, ebenso könnte Acryl verwendet werden.

Genaue Werte hinsichtlich der Festigkeit und Kerbschlagzähigkeit für den Kunststoff können nicht angegeben werden, da dieses Erfordernis unter anderem auch von der konstuktiven Ausführung der Abdeckung, der Größe der Abdeckungsflächen zwischen den Auflagepunkten sowie den zu erwartenden Belastungen abhängt. In der Summe der Faktoren müssen die vom Kunststoff gebotenen Werte ausreichend sein.

Beispielhafte Ausführungsformen gemäß der Erfindung sind im folgenden anhand der Figuren näher beschrieben, Es zeigen:

Fig. 1 eine Abdeckung in Form einer Schiebetür nach hekömmlicher Bauart,

Fig, 2 eine Abdeckung in Form einer Schiebetür gemäß der Erfindung,

Fig, 3 eine Abdeckung in Form einer Schwenkhaube gemäß der Erfindung, und

Fig. 4 eine gegenüber Fig. 3 abgewandelte Detaillösung.

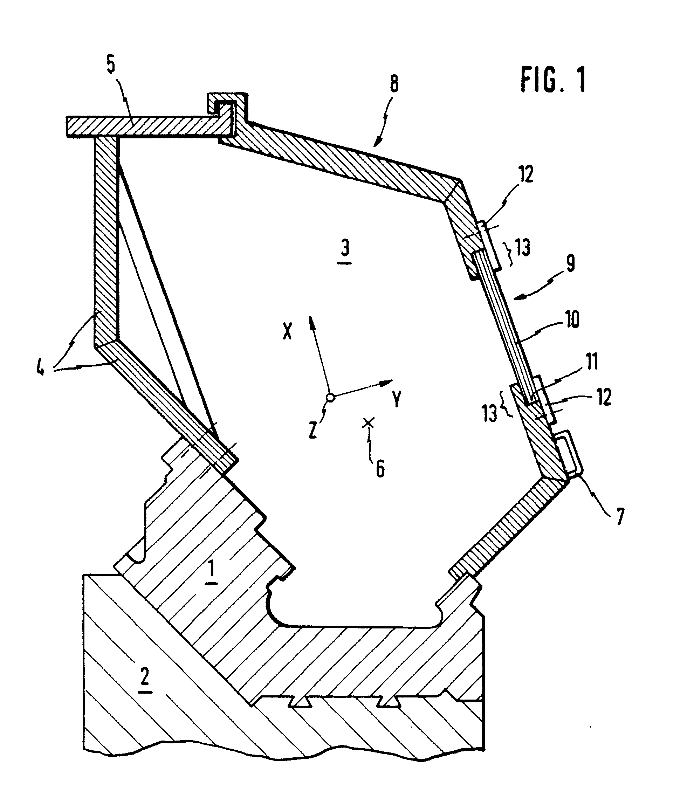

Fig. 1 zeigt eine Schiebetür 8 zur beweglichen Abdeckung des Arbeitsraumes 3 einer Drehmaschine. Dabei sind von der Drehmaschine außer der Drehmitte 6 lediglich das Bettoberteil 1 gezeichnet, welches auf dem Bettunterteil 2 ruht. Auf die Darstellung der übrigen Aggregate wie Spindelkasten, Werkzeugsupporte, Reitstock etc. wurde zur besseren Verdeutlichung der Schiebetür 8 verzichtet.

Am Bettoberteil 1 ist eine hintere Abdeckung 4 fest angeordnet. Am oberen Ende dieser hinteren Abdeckung 4 befindet sich etwa waagerecht eine obere Abdeckung 5, die jedoch nicht einmal bis auf die Höhe der Drehmitte 6 nach vorne ragt, An der vorderen Kante dieser oberen Abdeckung 5 sowie an der vordersten oberen Kante des Oberteils 1 ist die Schiebetür geführt.

Diese besitzt einen etwa trapezförmigen Querschnit ohne Basis, bestehend aus einem mittleren Teil, der dem Bediener zugewandt ist und ein Sichtfenster 9 aufweist. Dieser mittlere Teil steht etwa senkrecht oder ist leicht nach oben und hinten abfallend geneigt. Der sich nach oben hin anschließende obere Teil der Schiebetür steigt nach hinter leicht an, kann jedoch ebenso auch waagerecht verlaufen. Ebenso strebt der sich nach unten anschließende untere Teil der Schiebetür 8 nach hinten ab.

Im Mittelteil der Schiebetur ist das Sichtfenster 9 so angeordnet, daß es für den vor der Maschine stehenden Dediener den Blick auf die wesentlichen Teile des Arbeitsraumes, bei einer Drehmaschine also auf die Drehmitte 6 freigibt. Die Scheibe 10 besteht dabei entweder aus Panzerglas von mindestens 25 oder gar 28 mm Dicke,. welches einen Beschuß durch wegfliegende Bauteile abfangen soll. In dieses Panzerglas ist wenigstens eine Kunststoff-Folie eingearbeitet, die für den Fall, daß die aufgenommene Energie dennoch zum Brechen des Glases führt, das Wegfliegen einzelner Glassplitter verhindern soll.

Ebenso kann die Scheibe 10 jedoch auch aus Polykarbonat bestehen, wofür eine Dicke der Scheibe 10 ab 8 mm meist ausreichend ist.

Dieses Polykarbonat verformt sich beim Beschuß durch davonfliegende Teile jedoch wesentlich stärker als das relativ starre mineralische Panzerglas. Üblicherweise liegt die Scheibe 10 in einer Nut der stählernen Frontfläche der Schiebetür 8 und ist in dieser Nut durch einen meist umlaufenden Abdeckrahmen 12 befestigt.

Abhängig vom Material der Scheibe muß zwischen dem Außenrand der Scheibe 10 und dem Innenrand der Schiebetür 8 am Sichtfenster bzw. des Abdeckrahmens 12 eine Überlappung 13 vorhanden sein, die gewährleistet, daß auch bei einer starken Durchbiegung der Scheibe der sich zur Mitte der Scheibe hin bewegende Rand nicht aus der durch die Schiebetür 8 und Abdeckrahmen 12 bestehenden Halterung hinauskann.

Selbstverständlich sind an diesen Türen in geeigneter Höhe ein oder mehrere Griffe 7 angebracht, um die beim Stand der Technik sehr schweren Schiebetüren bewegen zu können. Denn die Stahlteile der Schiebetür 8 bestehen aus beispielsweise 6 mm starkem Stahlblech, und auch die Verwendung von Panzerglas im Bereich des Sichtfensters 9 bringt nur eine geringfügige Gewichtsersparnis an dieser Fläche.

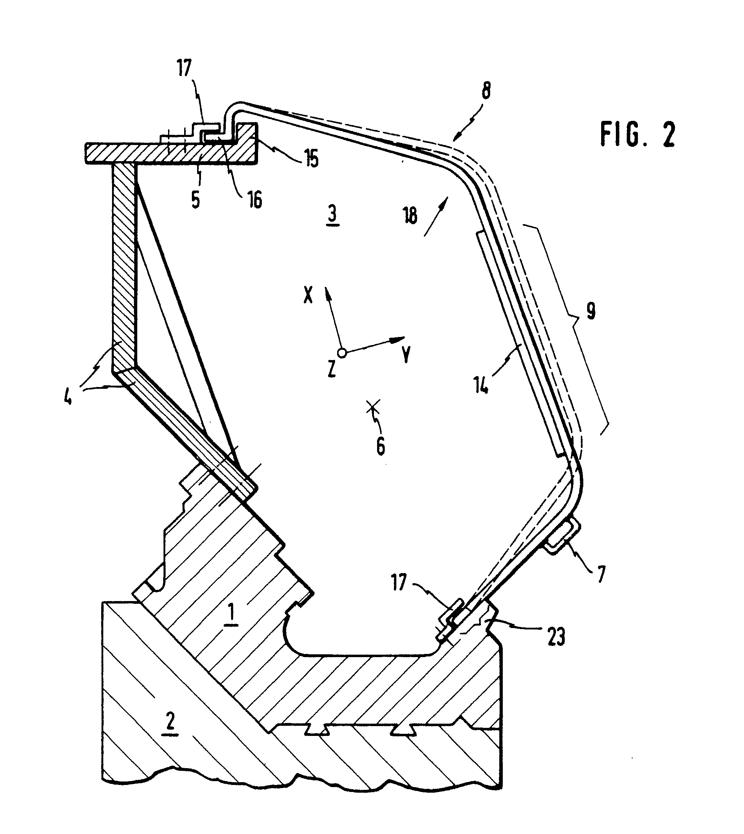

Demgegenüber zeigt Fig. 2 eine erfindungsmäße Schiebetür 8, die im wesentlichen, also bis auf die Führungselemente, Griffe etc., aus Polykarbonat besteht.

Da sich die erfindungsgemäße Schiebetür 8 an der gleichen Maschine wie die herkömmliche Schiebetür 8 der Fig. 1 befinden soll, stimmt die Darstellung der Fig. 2 betreffend Bettunterteil 2, Bettoberteil 1, sowie hintere und obere Abdeckung 4 bzw. 5 mit der Darstellung der Fig. 1 überein.

Wird die Schiebetür erfindungsgemäß vollständig aus Polykarbonat hergestellt, so ist dabei zu beachten, daß bei einem Beschuß der Schiebetür 8 vom Arbeitsraum her eine stärkere Durchbiegung der gesamten Schiebetür 8 nach außen erfolgt als beiu herkömmlicher Bauart aus Stahlblech. Infolgedessen ist darauf zu achten, daß dadurch punktuell im Bereich der Führungselemente am oberen und unteren Rand der Schiebetür 8 keine so starken Belastungen auftreten, daß diese Führungselemente beispielsweise einzeln aus der Schiebetür 8 ausreissen und sich dadurch die gesamte Schiebtür 8 nach vorne auf den Bediener zu bewegen kann.

In der Praxis muß deshalb wenigstens an einer der beiden, also der oberen oder der unteren Endkante der Schiebetür 8 ein Hintergreifen der gesamten Schiebetür an den entsprechenden festen Maschinenteilen gegeben sein, Gemäß Fig. 2 weist deshalb die obere Abdeckung 5 an deren Vorderkannte eine Kröpfung 15 auf, die sich nach oben erstreckt, Diese nach oben wegragende Kröpfung 15 hintergreift die obere Endkante der Schiebetür 8 und weist zusätzlich an der nach unten weisenden Hintergreifung einen nach hinten wegragenden Fortsatz 16 auf, der etwa parallel zur oberen Abdeckung 5 verläuft. Dieser Fortsatz 16 kann nämlich zusätzlich durch eine Sicherungsleiste 17, die fest mit der oberen Abdeckung 5 nach Einsetzen der Schiebetür 8 verschraubt wird, gegen das Abheben nach oben gesichert werden.

Selbstverständlich sind zur Reibungsverminderung zwischen den relativ zueinander zu bewegenden Flächen am oberen Ende der Schiebetür 8 und der oberen Abdeckung 5 bzw. der Kröpfung. 15 ebenso wie ggf. auch zwischen dem Fortsatz 16 der Schiebetür 8 und der Sicherungsleiste 17 an der Maschine Gleitelemente wie etwa Rollkörper etc. angeordnet, um ein leichteres und dennoch möglichst spielfreies Verschieben der Verschiebetür zu ermöglichen.

Die Querschnittsform der erfindungsgemäßen Schiebetür 8 aus Polykarbonat entspricht im wesentlichen der der herkömmlichen Bauart, also der Form eines ungleichmäßigen Trapezes ohne Basis, allerdings sind die Kanten stark gerundet, angepaßt an die Herstellungsprinzipien von Formteilen aus Polykarbonat.

Befindet sich die dargelegte hintergreifende Führung an der oberen Kante der erfiondungsgemäßen Schiebetür 8, so genugt es, wenn an der unteren Kante der Schiebetür 8 diese sich ausreichend weit innerhalb des Bettoberteiles 1 bzw. eines Bauteiles befindet, welches mit dem Bettoberteil 1 fest verbunden werden kann. Dadurch muß eine Überlappung 23, und zwar möglichst über die gesamte Breite der Schiebetüre, gegeben sein, die bei Druck auf die Schiebetür 8 von der Innenseite her, ein Abheben der Schiebetüre von der Maschine auch an der Unterkante verhindert.

Da bei einem regelrechten Beschuß von der Innenseite her, beispielsweise in Richtung des Pfeiles 18, eine Verwindung der gesamten Schiebetür etwa in die gestrichelte Position erfolgt, vermindert sich in diesem Fall auch die Überlappung 23. Es muß jedoch bei der Überlappung 23 sichergestellt sein, daß auch bei größtmöglicher Durchbiegung der Schiebetür 8 aus Polykarbonat die Überlappung 23 nicht auf Null reduziert wird, also die untere Kante der Schiebetür 8 auch bei größtmöglicher Durchbiegung noch immer innerhalb des Bettoberteiles 1 bzw. eines damit fest verbundenen Bauteiles liegt.

Da sich die Schiebetür 8 auch nicht nach innen zum Arbeitsraum hin von der entsprechenden Führungsfläche des Bettoberteils 1 abheben soll, kann auch diese untere Kante der Schiebetür 8 durch eine entsprechende, überlappende Sicherheitsleiste 17, die fest im Bettoberteil 1 verbunden ist und etwa S-förmige Gestalt aufweist, am Abheben gehindert werden.

Auf diese Art und Weise wird eine sehr viel leichtere und auch in den Abmessungen dünnere bewegliche Abdeckung des Arbeitsraumes geschaffen, die zudem materialbedingt vollständig durchsichtig ist.

Da jedoch durch die im Arbeitsraum herumfliegenden Späne sowie Kühlmittel und Schmiermittel eine starke Verschmutzung der Innenseite der Schiebtür 8 gegeben ist, ist es sinnvoll, bis auf den Bereich des Sichtfensters 9 den Rest der Schiebetür 8 zwar lichtdurchlässig zu gestalten, um bessere Lichtverhältnisse im Arbeitsraum zur Beobachtung zu haben, jedoch undurchsichtig zu belassen. Dies kann beispielsweise durch entsprechende Mattierung einer der Flächen der Schiebetür 8 erzielt werden, was beispielsweise durch Sandstrahlen erfolgen kann. Im Bereich des Sichtfensters 9 wird dagegen auf der Innenfläche der Schiebetür 8, also zum Arbeitsraum 3 hin, zusätzlich eine dünne Glasscheibe 14 auf die Schiebetür 8 aufgebracht. Diese Scheibe 14 aus mineralischem Glasmuß so mit der Schiebetür 8 verbunden sein, daß zwischen beide keine verschmutzenden Stoffe eindringen können. Die zum Arbeitsraum hin gerichtete Fläche der Scheibe 14 wird zwar ebenfalls schnell verschmutzen, kann jedoch aufgrund der Beschaffenheit des mineralischen Glases, also Säurefestigkeit, Härte etc., leicht gereinigt werden und zwar ohne daß dabei Kratzer entstehen. Ebenso hinterlassen auch heiße und scharfkantige Späne nur wenig Kratzer an dieser Scheibe 14.

Selbstverständlich kann diese relativ dünne Scheibe 14 brechen, bei starkem Beschuß des Sichtfensters 9, da die Scheibe 14 eine starke Durchbiegung der Schiebtür 8 aus Polykarbonat nicht mitmachen kann und deshalb brechen wird. In diesem Fall wird die zerstörte Scheibe 14 entfernt und eine neue Glasscheibe 14 aufgebracht, was zwar einen gewissen Aufwand an Zeit und Material bedeutet, jedoch andererseits eher in Kauf genommen werden kann als ein nach kurzer Zeit auf Dauer zerkratztes Sichtfenster, wenn im Bereich des Sichtfensters 9 die Schiebetür 8 aus Polykarbonat mehr oder weniger undurchsichtig wird.

Natürlich hat auch die erfindungsgemäße Schiebtür 8 aus Polykarbonat an geeigneter Stelle einen oder mehrere Griffe 7, um die Schiebetür 8 entlang ihrer Führungen waagerecht hin und her zu bewegen.

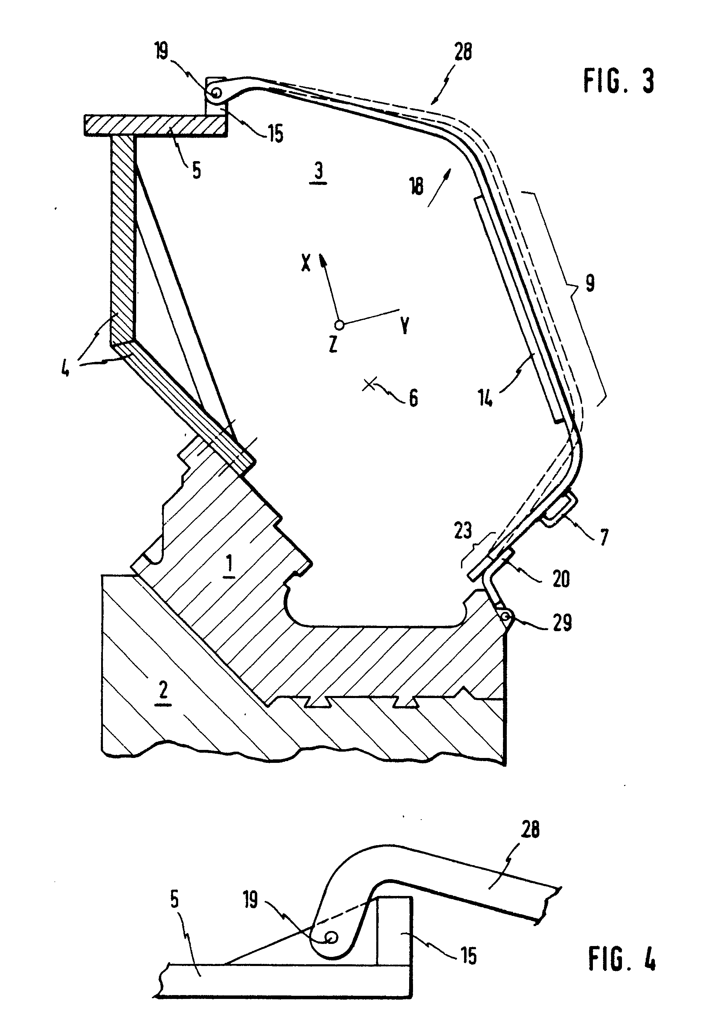

Demgegenüber zeigt Fig. 3 bei gleichem Aufbau der maschinenfesten Teile, also Bettunterteil 2, Bettoberteil 1, hintere und obere Abdeckungen 4 bzw. 5 einschließlich der nach oben gerichteten Kröpfung 15 am vorderen Ende der oberen Abdeckung 5 die Ausbildung einer beweglichen Abdeckung der Vorderseite des Arbeitsraumes 3 als Schwenkhaube 28, die ebenfalls erfindungsgemäß im wesentlichen aus Polykarbonat besteht und an der oberen, hinteren Endkante um eine Schwenkachse 19, die beispielsweise in der nach oben gerichteten Kröpfung 15 der oberen Abndeckung 5 gelagert ist nach oben aufgeschwenkt werden kann. Besser ist natürlich, wenn diese Schwenkachse 19 sich nicht in der nach oben aufragenden Kröpfung 15 der oberen Abdeckung befindet, sondern hinter dieser Kröpfung 15. In diesem Fall weist dann die erfindungsgemäße Schwenkhaube 28 aus Polykarbonat am oberen Ende wiederum eine nach oben gerichtete Hintergreifung der nach oben gerichteten Kröpfung 15 auf. Dies bedeutet, daß im Fall eines so starken Schlages vom Arbeitsraum nach außen beispielsweise bei einem schräg nach oben gerichteten Stoß 18, wie in Fig., 2 eingezeichnet, auch bei Ausreißen der Schwenkachse 19 der Schwenkhaube 28 diese sich aufgrund der Hintergreifung nur bis zur Kröpfung 15 nach vorne bewegen kann. Erstreckt sich diese Hintergreifung über die gesamte Breite der Schwenkhaube 28, so sind für das Abbrechen der nach unten reichenden Hintergreifung an der Oberkante der Schwenkhaube 28 wesentlich höhere Kräfte notwendig, als zum Ausreißen eines Schwenkachse 19, die ggf. nur aus eingelassenen Endzapfen auf beiden Seiten der Schwenkhaube 28 besteht. Selbstverständlich ist auch in diesem Fall die Schwenkachse 19 in einem maschinenfesten Teil, etwa einem Lagerbock, der mit der oberen Abdeckung 5 und/oder der senkrechten Kröpfung 15 verschweißt ist, untergebracht.

Bei Anordnung der Schwenkachse 19 an der oberen Endkante der Schwenkhaube 28 muß im Betrieb der Werkzeugmaschine auch hier an der unteren Endkante eine Überlappung 23 der Schwenkhaube 28 mit den maschinenfesten Bestandteilen gegeben sein, so daß bei Beschuß der Schwenkhaube von innen nach außen auch die untere Kante gegen maschinenfeste Bestandteile drückt. Da die Schwenkhaube 28 jedoch zur Zugänglichmachung des Arbeitsraumes nach oben aufschwenkbar sein muß, bewegt sich dadurch die unterste Kante, je nachdem, ob sie senkrecht nach unten oder nahezu waagerecht nach innen verläuft, auch nach vorne. Die im Bedarfsfall gegen diese Außenfläche der unteren Kante der Schwenkhaube 28 drückenden maschinenfesten Bestandteile müssen deshalb zum Öffnen der Schwenkhaube 28 entfernt werden können. Dies kann beispielsweise dadurch geschehen, daß es sich bei diesen gegenhaltenden Teilem um eine Überlappungsleiste 20 handelt, die unterhalb der unteren Kante der Schwenkhaube 28 schwenkbar um eine Schwenkachse 29 am Bettoberteil 1 befestigt ist. Zum Öffnen der Schwenkhaube 28 wird diese Überlappungsleiste nach unten weggeklappt und für den Betrieb der Werkzeugmaschine nach Schließen der Schwenkhaube 28 hochgeklappt und drückt damit gegen die Außenfläche der Schwenkhaube 28 in deren unterem Bereich. Natürlich muß die Überlappungsleiste 20 hierzu in dieser Stellung am Bettoberteil 1 gesichert werden können. Auch bei dieser Ausführungsform muß eine ausreiochende Überlappung 23 zwischen der Unterkante der Schwenkhaube 28 und der Oberkante der außerhalb der Schwenkhaube 28 verlaufenden maschinenfesten Bestandteile, also in diesem Fall der Oberkante der Überlappungsleiste 20 gegeben sein. Ausreichend ist die Überlappung 23 dann, wenn auch bei stärkstem denkbaren Beschuß der Schwenkhaube 28 von innen nach außen die Durchbiegung und Verwindung der Schwenkhaube 28 nicht so groß wird, daß die Unterkante der Schwenkhaube 28 trotz geschlossener Überlappungsleiste 20 über diese hinwegrutschen und zu einem ungewollten Öffnen der Schwenkhaube 28 führen kann.

Wie groß die Überlappungen 23 faktisch sein müssen, ergibt sich aus den Materialeigenschaften des verwendeten Polykarbonats, der Dicke der Schwenkhaube 8 bzw. Schiebtür 8 und der möglichen kinetischen Energie der von innen auf die Abdeckung auftreffenden Teile.

## Ansprüche

1. Bewegliche, bedienerseitige Abdeckung des Arbeitsraumes einer Werkzeugmaschine mit Sichtfenster aus durchsichtigem, ausreichend festem und kerbschlagzähem Kunststoff,
dadurch **gekennzeichnet,** daß
die bewegliche Abdeckung im Ganzen im wesentlichen aus durchsichtigem, ausreichend festem und kerbschlagzähem Kunststoff besteht.

2. Abdeckung nach Anspruch 1,
dadurch **gekennzeichnet,** daß
das Sichtfenster (9) zum Arbeitsraum (3) hin zusätzlich eine entfernbare, schmutzdicht an der Abdeckung aus Kunststoff befestigte Glasscheibe (14) aufweist.

3. Abdeckung nach Anspruch 2,
dadurch **gekennzeichnet,** daß
die Abdeckung bis auf die Fläche des Sichtfensters (9) lichtdurchlässig, jedoch undurchsichtig gehalten ist.

4. Abdeckung nach Anspruch 3,
dadurch **gekennzeichnet,** daß
die mattierte Fläche sandgestrahlt ist.

5. Abdeckung nach einem der vorhergehenden Ansprüche,
dadurch **gekennzeichnet,** daß
es sich bei dem Kunststoff um Polykarbonat handelt.

6. Abdeckung nach einem der vorhergehenden Ansprüche,
dadurch **gekennzeichnet,** daß
es sich bei der Abdeckung um einen Schwenkhaube handelt.

7. Abdeckung nach Anspruch 6,
dadurch **gekennzeichnet,** daß
die Schwenkhaube (28) an der von der Schwenkachse entgegengesetzten Endkante auf der Außenseite von einer Überlappungsleiste (20) geschlossen gehalten wird, die mit der Werkzeugmaschine in dieser Position fest verbundne werden kann und auf der Außenseite der Schwenkhaube (28) diese im unteren Bereich über die gesamte Breite ausreichend überlappt.

8. Abdeckung nach Anspruch 6 oder 7,
dadurch **gekennzeichnet,** daß
die Schwenkhaube (28) in der Nähe der oberen Endkante um eine Schwenkachse (19) verschwenkt werden kann.

9. Abdeckung nach Anspruch 1, 2, 3, 4 oder 5,
dadurch **gekennzeichnet,** daß
es sich bei der Abdeckung um eine Schiebetür (8) handelt.

10. Abdeckung nach Anspruch 9,
dadurch **gekennzeichnet,** daß
sich die untere Endkante der Schiebetür (8) soweit innerhalb des Bettoberteils (1) bzw. eines damit fest verbindbaren Teiles befindet, daß zwischen der Außenfläche der Schiebetür (8) und der gegenüberliegenden Innenfläche des Bettoberteils (1) oder eines damit fest verbundenen Teiles eine ausreichend große Überlappung (23) gegeben ist.

11. Abdeckung nach einem der vorhergehenden Ansprüche,
dadurch **gekennzeichnet,** daß
die obere Abdeckung (5) an ihrem vorderen Ende eine nach oben weisende Kröpfung (15) aufweist, welche durch einen nach unten weisenden Abschnitt der Schiebetür (8) im Bereich der oberen Endkante hintergriffen wird.

12. Abdeckung nach einem der vorhergehenden Ansprüche,
dadurch **gekennzeichnet,** daß
die Abdeckungim Querscnitt im wesentlichen die Form eines ungleichen Trapezes ohne Basislinie besitzt, die obere Endkante weiter hinten als die untere Endkante liegt.

13. Unbewegliche Abdeckung des Arbeitsraumes einer Werkzeugmaschine,
dadurch **gekennzeichnet,** daß
die Abdeckung im wesentlichen im ganzen aus lichtdurchlässigem, ausreichend festem und kerbschlagzähen Kunststoff besteht.

14. Abdeckung nach Anspruch 13,
dadurch **gekennzeichnet,** daß
es sich bei dem Kunststoff um einen durchsichtigen Kunststoff handelt.

15. Abdeckung nach Anspruch 13 oder 14,
dadurch **gekennzeichnet,** daß
es sich um einen faserverstärkten Kunststoff handelt.

16. Abdeckung nach Anspruch 13,
dadurch **gekennzeichnet,** daß es sich bei dem Kunststoff um Polykarbonat handelt.

FIG. 1

FIG. 2

FIG. 3

FIG. 4